# EUROPÄISCHE PATENTSCHRIFT

(11) **EP 3 764 844 B1**
(45) Veröffentlichungstag und Bekanntmachung des Hinweises auf die Patenterteilung: **14.09.2022**
(21) Anmeldenummer: 19765661.4
(22) Anmeldetag: 20.08.2019
(51) Int. Cl.: A47C 9/02, A47C 7/00

(54) **STUHLFÜHRUNG**
CHAIR GUIDE
GLISSIÈRE DE SIÈGE

(30) Priorität: 24.08.2018 DE 102018006696
(43) Veröffentlichungstag der Anmeldung: 20.01.2021
(73) Patentinhaber: goracon engineering gmbh, 48565 Steinfurt (DE)
(72) Erfinder: Hermans, Ralf, 48356 Nordwalde (DE)
(74) Vertreter: Busse & Busse
(86) Internationale Anmeldenummer: PCT/EP2019/072290
(87) Internationale Veröffentlichungsnummer: WO 2020/038955

(56) Entgegenhaltungen:
- EP-A1- 1 530 438
- EP-A1- 2 687 129
- DE-U1-202013 005 988

## Beschreibung

Die Erfindung bezieht sich auf eine Vorrichtung zur Abstützung und zur beweglichen Führung eines Stuhles in einer in einem Gehäuse vorgesehenen, beispielsweise als Langlochführung ausgebildeten Führungskulisse mit einem in der Führungskulisse verfahrbaren, eine Stuhlaufnahme des Stuhles abstützenden Laufwagen.

Vorrichtungen zur Abstützung und zur beweglichen Führung eines Stuhles der vorgenannten Art werden beispielsweise in Sitzungssälen von öffentlichen Gebäuden benutzt, in denen die Vorrichtung z. B. in den Saalboden eingelassen ist, um es zu ermöglichen, dass die Stuhlposition zu einem festmonierten Tisch verändert werden kann. Darüber hinaus sind Vorrichtungen der eingangs genannten Art bekannt, die derart ausgerüstet sind, dass bei Nichtbesetzung des Stuhles der Stuhl automatisch in eine Ruheposition verfährt, in der die Sitzfläche weitestgehend unterhalb des fest montierten Tisches gelegen ist. Somit sind geordnete Stuhlpositionen automatisch einzunehmen, um hinter Rückenlehnen der Stühle ausreichend Durchgänge bereitzustellen.

Die DE 20 2013 005 988 U1 offenbart eine solche Vorrichtung gemäß dem Stand der Technik.

Derartige Stuhlführungen sind allerdings auch für einen weiteren vielfältigen Einsatz geeignet. So können diese beispielsweise in Wohnmobilen, in Wohnwagen, auf Booten und Yachten und sonstigen Aufstellräumen benutzt werden, um in einer ersten Gebrauchsbetriebsstellung die Stühle derart an einem Tisch zu positionieren, dass für Personen ein hinreichender Abstand und eine hinreichende Sitzposition zu einem Tisch eingenommen werden kann. In einer anderen Betriebsstellung, beispielsweise während einer Fahrt eines Wohnmobils oder eines Bootes, kann es jedoch wünschenswert sein, den Stuhl in einer anderen Position zu platzieren. Dies ist mit bekannten Stuhlführungen jedoch nicht möglich, da diese in aller Regel nur eine Führungskulisse aufweisen, die auf einen Tisch zu oder von diesem Tisch weg zu bewegen ist, um die Sitzfläche des Stuhles in der Ruheposition unterhalb des Tisches anordnen zu können.

Eine Vorrichtung der eingangs genannten Art ist aus der DE 20 2013 005 988 U1 bekannt. Dieser halten die vorstehend genannten Nachteile an.

Es ist Aufgabe der vorliegenden Erfindung, eine Vorrichtung zur Abstützung und zur beweglichen Führung eines Stuhles derart weiterzubilden, dass ein Stuhl in Stuhlpositionen zu überführen ist, mit der eine variationsreiche Nutzung und Platzausnutzung in einem Gebäude und/oder in einem Wohnmobil, einem Boot, einer Yacht und dgl. Aufstellräumlichkeiten realisierbar ist.

Zur Lösung dieser Aufgabe zeichnet sich die Vorrichtung zur Abstützung und zur beweglichen Führung eines Stuhles der eingangs genannten Art dadurch aus, dass die Führungskulisse zumindest zwei Führungskulissentrassen aufweist, zwischen denen eine verstellbare Weiche vorgesehen ist, um den Stuhl aus der einen Führungskulissentrasse, in die andere Führungskulissentrasse und umgekehrt zu überführen.

Damit ist eine Vorrichtung zur Abstützung und zur beweglichen Führung eines Stuhles zur Verfügung gestellt, bei der über die zumindest zwei Führungskulissentrassen ein Stuhl in verschiedene Richtungen zu bewegen, vorzugsweise zu verschieben ist. Dabei können die Führungskulissen auch winklig zueinander ausgerichtet sein, beispielsweise rechtwinklig, so dass ein Stuhl entlang eines z. B. rechtwinkligen oder quadratischen Tisches über die Weiche zu bewegen ist. Die Weiche ist bevorzugtermaßen ein verstellbares, insbesondere verdrehbares Bauteil mit einer jeweiligen Führungskulisse oder dgl. Langlochführung oder Langlochführungen, die an der Führungskulisse bzw. einer Langlochführung einer Führungskulissentrasse fluchtend ausgerichtet werden kann, so dass ein Stuhl in die entsprechende Führungskulisse der Weiche eingefahren werden kann. Danach ist die Weiche mitsamt dem Stuhl und der Stuhlführung zu verstellen, insbesondere zu verschwenken, um danach mit der Führungskulisse der benachbarten Führungskulissentrasse zu fluchten, so dass der Stuhl mitsamt der Stuhlaufnahme dann entlang der zweiten Führungskulissentrasse zu verfahren ist. So können für die verschiedensten Nutzungskonzepte die Stühle verfahren und angeordnet sein. So können beispielsweise während des Fahrt eines Wohnmobils zwei Stühle nebeneinander in einer arretierten Fahrbetriebsstellung in einer Führungskulissentrasse angeordnet sein, um während einer Stillstandzeit dann z. B. zur Nutzung eines Essplatzes an eine Stirnseite eines Tisches verfahren zu werden. Ebenfalls ist es möglich, Abstände zwischen zwei benachbarten Stühlen zu verändern, indem sich an der Führungskulissentrasse entlang z. B. eines Bistro-Tisches oder eines Bar-Tresens erstreckt. Die Führungskulissentrassen können derart ausgebildet sein, dass z. B. über eine herausnehmbare Weiche Stuhlführungen und Stuhlführungen aus einer Führungskulissentrasse zu entnehmen sind oder in diese einzuführen sind.

Hinsichtlich weiterer wesentlicher Ausgestaltungen wird auf weitere Unteransprüche, die nachfolgende Beschreibung und die Zeichnung verwiesen. In der Zeichnung zeigen:
- Fig. 1:: ein Ausführungsbeispiel der Vorrichtung nach der Erfindung, dargestellt in einer Anordnung in einem Wohnmobil mit zwei Stühlen an einem rechteckigen Tisch in ersten Stuhlführungspositionen;
- Fig. 2:: das Ausführungsbeispiel nach Fig. 1 in einer anderen Ansicht;

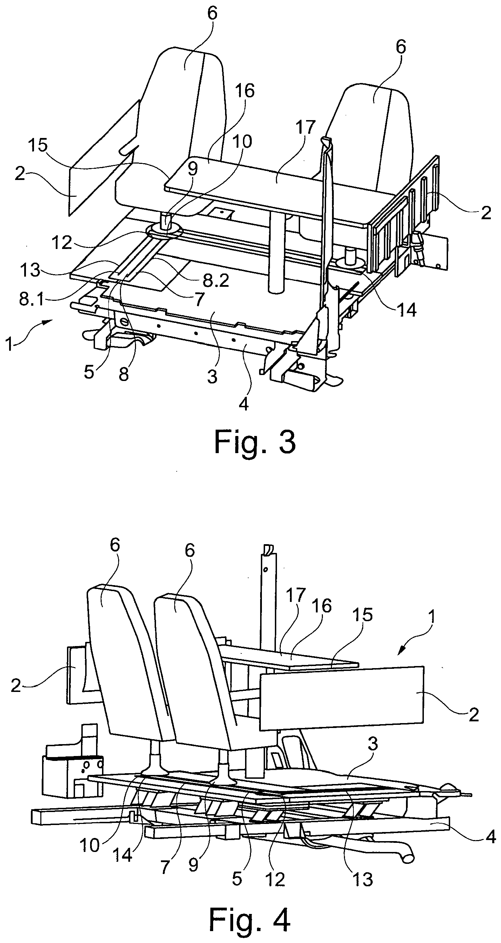

- Fig. 3:: eine zu Fig. 1 analoge Darstellung des Ausführungsbeispiels nach Fig. 1 mit einem auf eine Weiche verschobenen Stuhl;
- Fig. 4:: das Ausführungsbeispiel nach den Fig. 1 und 2 in einer Ansicht schräg von hinten;
- Fig. 5:: das Ausführungsbeispiel nach Fig. 1 mit zwei Stühlen, von denen einer an der Längsseite eines Tisches angeordnet ist und ein zweiter an der Stirnseite eines Tisches;
- Fig. 6:: das Ausführungsbeispiel nach Fig. 5 aus einer anderen Perspektive, und
- Fig. 7:: das Ausführungsbeispiel nach Fig. 5 mit Darstellung eines zusätzlich hineingestellten Stuhles.

Der Zeichnung sind übereinstimmende Teile mit übereinstimmenden Bezugsziffern beziffert.

Die Zeichnungen zeigen allgemein im Ganzen den nicht dargestellten Aufnahmeraum 1 in einem Wohnmobil, einem Gebäude, einem Boot, einer Yacht oder dgl. Aufstellraum mit jeweiligen Außenwänden 2, einem Boden 3 und einem Chassis 4, auf dem der Boden 3 abgestützt ist. In dem Boden 3 ist die Vorrichtung 5 zur Abstützung und zur beweglichen Führung von Stühlen 6 vorgesehen, die ein Gehäuse 7 aufweist mit einer Führungskulisse 8, die in dem gezeigten Ausführungsbeispiel aus zwei Langlöchern 8.1 und 8.2 besteht, die von einer Stuhlaufnahme 9 durchgriffen ist, die einen Laufwagen 10 aufweist, über den die Stuhlaufnahme 9 mitsamt dem Stuhl 6 entlang der Langlöcher 8.1 und 8.2 zu verfahren ist.

Es ist eine Weiche 12 zwischen den beiden Führungskulissentrassen 13 und 14 vorgesehen. Die Führungskulissentrassen 13 und 14 sind rechtwinklig zueinander ausgerichtet und über die verdrehbare Weiche 12 wechselseitig zu verbinden.

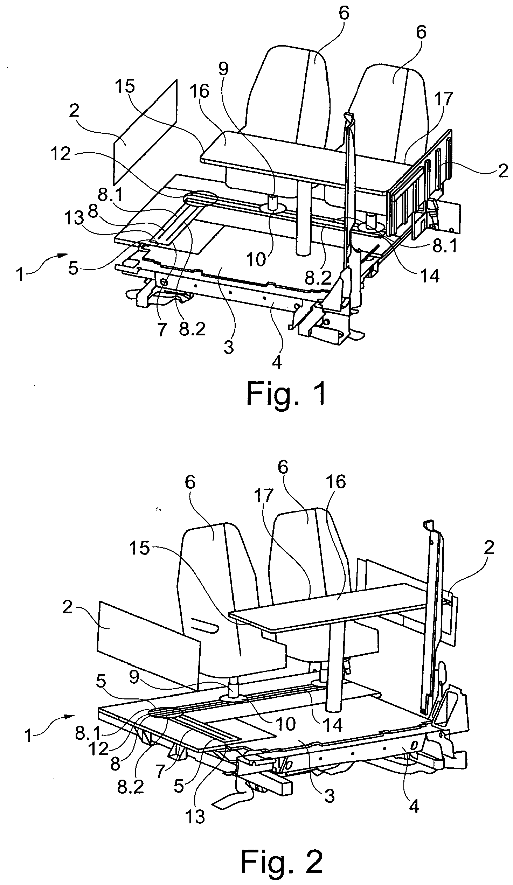

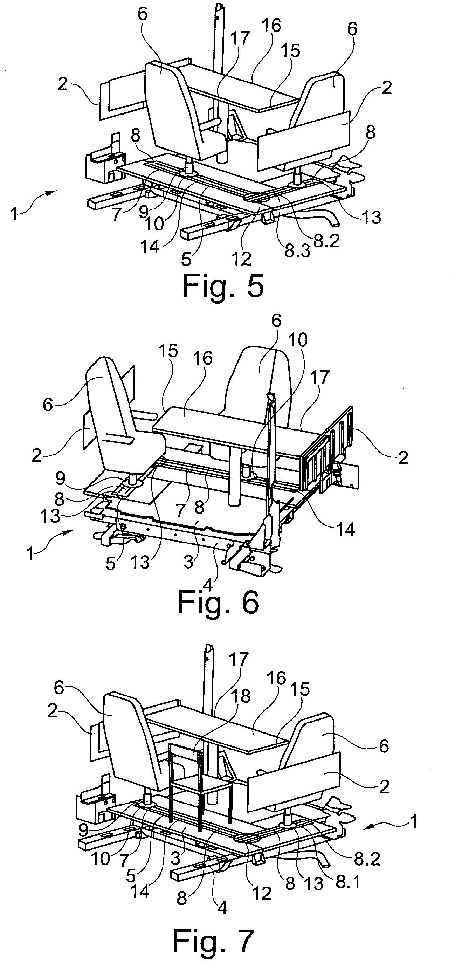

In der Fig. 1 ist eine Stellung der Weiche 12 gezeigt, in der deren Langlaufführungen, koaxial zu den Langlaufführungen 8.1 und 8.2 Führungskulissentrasse 14 ausgerichtet sind, wohingegen in dem Ausführungsbeispiel nach den Fig. 5, 6 und 7 die Weiche 12 mit ihren Langlöchern koaxial zu den Langlöchern 8.2 und 8.3 der Führungskulisse 13 an der Stirnseite 15 des Tisches 16 und nicht mehr zur Längsseite 17 des Tisches 16 ausgerichtet ist.

Die Verstellung der Weiche 12 kann manuell erfolgen, aber auch beispielsweise motorisch angetrieben sein. Des Weiteren sind Sicherungsmittel vorgesehen, um den jeweiligen Stuhl 6 in jeder Position zu arretieren. Das schließt ein, dass der Stuhl auch auf der Weiche 12 arretiert sein kann.

Durch die Führungskulissentrassen 13 und 14, von denen auch mehr als zwei vorgesehen sein können, ist eine variationsreiche Platzierung von Stühlen 6 möglich und zwar, je nach Anwendungsfall oder Betriebszustand des Aufstellraumes 1, sei es in festen Gebäuden oder sei es in bewegbaren Aufstellräumen wie in Wohnwagen, Wohnmobilen und Yachten. Wie in Fig. 7 dargestellt, ist durch die Verschiebbarkeit der Stühle 6 in den Führungskulissentrassen 13 und 14 auch die Möglichkeit geschaffen, einen zusätzlichen Stuhl 18, wie in Fig. 7 dargestellt, unterzubringen.

## Patentansprüche

1. Vorrichtung (5) zur Abstützung und zur beweglichen Führung eines Stuhles (6) umfassend eine in einem Gehäuse (7) vorgesehene als Langlochführung ausgebildete Führungskulisse (8, 8.1, 8.2) mit einem in der Führungskulisse (8, 8.1, 8.2) verfahrbaren, eine Stuhlaufnahme (9) des Stuhles (6) abstützenden Laufwagen (10), **dadurch gekennzeichnet, dass** die Führungskulisse (8, 8.1, 8.2) zumindest zwei Führungskulissentrassen (13, 14) aufweist, zwischen denen eine verstellbare Weiche (12) vorgesehen ist, um den Stuhl (6) aus der einen Führungskulissentrasse (13), in die andere Führungskulissentrasse (14) und umgekehrt zu überführen.

2. Vorrichtung (5) nach Anspruch 1, **dadurch gekennzeichnet, dass** die zumindest zwei Führungskulissentrassen (13, 14) abgewinkelt zueinander ausgerichtet sind.

3. Vorrichtung (5) nach Anspruch 2, **dadurch gekennzeichnet, dass** die zumindest zwei Führungskulissentrassen (13, 14) rechtwinklig zueinander ausgerichtet sind.

4. Vorrichtung (5) nach einem der Ansprüche 1 bis 3, **dadurch gekennzeichnet, dass** die Führungskulissentrassen (13, 14) zumindest eine in dem Gehäuse (7) angeordnete Langlochführung (8, 8.1, 8.2) als Führungskulisse (13, 14) aufweisen und die Weiche ebenfalls eine mit der jeweiligen Führungskulisse einer Führungstrasse in einer Betriebsstellung koaxiale Führungskulisse aufweist, wobei die Führungskulisse der Weiche (12) in einer zweiten Betriebsstellung mit der Führungskulisse (8, 8.1, 8.2) einer anderen Führungskulissentrasse (13, 14) koaxial ausgebildet ist.

5. Vorrichtung (5) nach Anspruch 4, **dadurch gekennzeichnet, dass** jede Führungskulisse (8, 8.1, 8.2) und die Weiche (12) jeweils zwei mit Abstand zueinander angeordnete Langlöcher (8.1, 8.2) als jeweilige Führungskulisse aufweisen.

6. Vorrichtung (5) nach einem der vorhergehenden Ansprüche, **dadurch gekennzeichnet, dass** die Weiche (12) verdrehbar gelagert ist.

7. Vorrichtung (5) nach einem der vorhergehenden Ansprüche, **dadurch gekennzeichnet, dass** die Weiche (12) in ihrer jeweiligen Betriebsstellung arretierbar ist.

8. Vorrichtung (5) nach einem der vorhergehenden Ansprüche, **dadurch gekennzeichnet, dass** der Stuhl (6) mitsamt der Stuhlaufnahme (9) im montierten Zustand über die Weiche (12) aus der einen Führungskulissentrasse (13, 14) in die andere Führungskulissentrasse (13, 14) verfahrbar ist und der Stuhl (6) mitsamt der Stuhlaufnahme (9) zusammen mit der Weiche (12) aus einer Betriebsstellung in eine andere Betriebsstellung verschwenkbar ist.

9. Vorrichtung (5) nach einem der vorhergehenden Ansprüche, **dadurch gekennzeichnet, dass** das Gehäuse (7) und die Weiche (12) planeben mit dem Boden (3) eines Gebäudes, eines Wohnmobils, eines Wohnwagens, eines Bootes oder einer Yacht verbindbar ist.

## Claims

1. Apparatus (5) for supporting and movably guiding a chair (6), comprising a guide track (8, 8.1, 8.2) which is provided in a housing (7), is designed in the form of a slot guide and has a carriage (10), which can be displaced in the guide track (8, 8.1, 8.2) and supports a mount (9) of the chair (6), **characterized in that** the guide track (8, 8.1, 8.2) has at least two guide-track sections (13, 14), between which an adjustable track switch (12) is provided in order to transfer the chair (6) from the one guide-track section (13) into the other guide-track section (14), and vice versa.

2. Apparatus (5) according to Claim 1, **characterized in that** the at least two guide-track sections (13, 14) are oriented at an angle to one another.

3. Apparatus (5) according to Claim 2, **characterized in that** the at least two guide-track sections (13, 14) are oriented at right angles to one another.

4. Apparatus (5) according to one of Claims 1 to 3, **characterized in that** the guide-track sections (13, 14) have at least one slot guide (8, 8.1, 8.2), arranged in the housing (7), forming the guide track (13, 14), and the track switch likewise has a guide track, which in one operating position is coaxial with the respective guide track of one guide section, wherein the guide track of the track switch (12) is designed so that, in a second operating position, it is coaxial with the guide track (8, 8.1, 8.2) of another guide-track section (13, 14).

5. Apparatus (5) according to Claim 4, **characterized in that** each guide track (8, 8.1, 8.2) and the track switch (12) each have two spaced-apart slots (8, 8.1, 8.2) forming the respective guide track.

6. Apparatus (5) according to one of the preceding claims, **characterized in that** the track switch (12) is mounted in a rotatable manner.

7. Apparatus (5) according to one of the preceding claims, **characterized in that** the track switch (12) can be arrested in its respective operating position.

8. Apparatus (5) according to one of the preceding claims, **characterized in that**, in the installed state, the chair (6) along with the chair mount (9) can be displaced, via the track switch (12), out of the one guide-track section (13, 14) into the other guide-track section (13, 14), and the chair (6) along with the chair mount (9) together with the track switch (12) can be pivoted out of one operation position into another operating position.

9. Apparatus (5) according to one of the preceding claims, **characterized in that** the housing (7) and the track switch (12) can be connected in a flush state to the floor (3) of a building, camper van, caravan, boat or yacht.

## Revendications

1. Dispositif (5) pour le soutien et le guidage mobile d'un siège (6), comprenant une coulisse de guidage (8, 8.1, 8.2) prévue dans un boîtier (7), configurée sous forme de guide à trous oblongs, avec un chariot (10) déplaçable dans la coulisse de guidage (8, 8.1, 8.2), soutenant un logement de siège (9) du siège (6), **caractérisé en ce que** la coulisse de guidage (8, 8.1, 8.2) présente au moins deux voies de coulisse de guidage (13, 14), entre lesquelles est prévu un aiguillage réglable (12) pour transférer le siège (6) d'une voie de coulisse de réglage (13) à l'autre voie de coulisse de réglage (14) et inversement.

2. Dispositif (5) selon la revendication 1, **caractérisé en ce que** les au moins deux voies de coulisse de guidage (13, 14) sont orientées de manière angulaire l'une par rapport à l'autre.

3. Dispositif (5) selon la revendication 2, **caractérisé en ce que** les au moins deux voies de coulisse de guidage (13, 14) sont orientées à angle droit l'une par rapport à l'autre.

4. Dispositif (5) selon l'une quelconque des revendications 1 à 3, **caractérisé en ce que** les voies de coulisse de guidage (13, 14) présentent au moins un guide à trous oblongs (8, 8.1, 8.2) agencé dans le boîtier (7) en tant que coulisse de guidage (13, 14) et l'aiguillage présente également une coulisse de guidage coaxiale à la coulisse de guidage respective d'une voie de guidage dans une position de fonctionnement, la coulisse de guidage de l'aiguillage (12) dans une deuxième position de fonctionnement étant configurée sous forme coaxiale à la coulisse de guidage (8, 8.1, 8.2) d'une autre voie de coulisse de guidage (13, 14).

5. Dispositif (5) selon la revendication 4, **caractérisé en ce que** chaque coulisse de guidage (8, 8.1, 8.2) et l'aiguillage (12) présentent chacun deux trous oblongs (8.1, 8.2) agencés à distance l'un de l'autre en tant que coulisse de guidage respective.

6. Dispositif (5) selon l'une quelconque des revendications précédentes, **caractérisé en ce que** l'aiguillage (12) est monté de manière à pouvoir tourner.

7. Dispositif (5) selon l'une quelconque des revendications précédentes, **caractérisé en ce que** l'aiguillage (12) peut être bloqué dans sa position de fonctionnement respective.

8. Dispositif (5) selon l'une quelconque des revendications précédentes, **caractérisé en ce que** le siège (6) avec le logement de siège (9) peut être déplacé à l'état monté par l'intermédiaire de l'aiguillage (12) d'une voie de coulisse de guidage (13, 14) à l'autre voie de coulisse de guidage (13, 14) et le siège (6) avec le logement de siège (9) peut être pivoté avec l'aiguillage (12) d'une position de fonctionnement à une autre position de fonctionnement.

9. Dispositif (5) selon l'une quelconque des revendications précédentes, **caractérisé en ce que** le boîtier (7) et l'aiguillage (12) peuvent être reliés à niveau avec le sol (3) d'un bâtiment, d'un camping-car, d'une caravane, d'un bateau ou d'un yacht.
